# FASCICULE DE BREVET EUROPEEN

(11) **EP 2 975 985 B1**
(45) Date de publication et mention de la délivrance du brevet: **12.09.2018**
(21) Numéro de dépôt: 14716897.5
(22) Date de dépôt: 19.03.2014
(51) Int. Cl.: A47J 43/046, A47J 43/07

(54) **APPAREIL DE PREPARATION CULINAIRE ELECTRIQUE AVEC RECIPIENT DE TRAVAIL**
ELEKTRISCHE SPEISENZUBEREITUNGSVORRICHTUNG MIT ARBEITSGEFÄSS
ELECTRICAL FOOD PREPARATION APPLIANCE WITH WORKING VESSEL

(30) Priorité: 22.03.2013 FR 1352602
(43) Date de publication de la demande: 27.01.2016
(73) Titulaire: SEB S.A., 69130 Ecully (FR)
(72) Inventeur: LABORDE, Daniel, F-64170 Artix (FR); DOMINGUEZ, Augustin, F-65000 Tarbes (FR); ASTEGNO, Didier, F-64000 Pau (FR)
(74) Mandataire: Cémeli, Eric Philippe Laurent
(86) Numéro de dépôt international: PCT/FR2014/050645
(87) Numéro de publication internationale: WO 2014/147346

(56) Documents cités:
- EP-A1- 1 586 259
- EP-A1- 2 368 470
- WO-A1-02/17761
- DE-U1- 29 915 733
- US-A- 4 174 073
- US-B1- 6 776 086

## Description

La présente invention concerne de manière générale un appareil de préparation culinaire comprenant un moteur électrique et un récipient de travail dans lequel les aliments sont placés pour y être préparés.

Il est connu dans l'art antérieur des appareils de préparation culinaire avec un récipient de travail. Ces appareils comprennent généralement un couvercle qui a pour fonction de sécuriser l'utilisation en empêchant l'utilisateur de placer un de ses membres dans le récipient de travail pendant le fonctionnement du moteur électrique. Une mise en oeuvre consiste à commander le moteur électrique par le couvercle. Il faut donc rendre ce dernier mobile par rapport au récipient de travail, ce qui peut compliquer l'interface entre ces deux pièces. En effet, le couvercle doit empêcher l'intrusion d'un membre de l'utilisateur, toute fuite du contenu du récipient de travail vers l'extérieur, et coulisser par rapport au récipient de travail pour commander l'interrupteur. Le coulissement relatif de ces deux pièces conduit souvent à des rayures qui dégradent l'aspect et la qualité perçue par l'utilisateur. De plus, si des impuretés se glissent entre les deux pièces, des coincements peuvent apparaître. Enfin, cette fonction de coulissement impose des tolérances de fabrication élevées qui augmentent les coûts de fabrication.

Un appareil de préparation culinaire selon le préambule de la revendication 1 est connu du document WO 02/17761.

Un but de la présente invention est de répondre aux inconvénients des documents de l'art antérieur mentionnés ci-dessus et en particulier, tout d'abord, de proposer un appareil de préparation culinaire électrique dont la commande de mise en marche est simple.

Pour cela un premier aspect de l'invention concerne un appareil de préparation culinaire comprenant :
- un boîtier support,
- un moteur électrique logé dans le boîtier support, avec un axe d'entraînement,
- un récipient de travail agencé pour être monté sur le boîtier support,
- au moins un outil de travail agencé dans le récipient de travail pour y être entrainé par l'axe d'entrainement,
- un interrupteur interne agencé pour commander le moteur électrique,
- un couvercle agencé pour être monté de manière amovible sur le récipient de travail,
le récipient de travail monté sur le boîtier support étant mobile par rapport au boîtier support depuis une position d'arrêt vers une position de fonctionnement, pour commander l'interrupteur interne lors d'un mouvement de commande provoqué par un utilisateur,
l'appareil comprenant une tige de commande agencée pour s'engager avec le couvercle lors du mouvement de montage du couvercle sur le récipient de travail, la tige de commande engagée avec le couvercle monté sur le récipient de travail étant agencée pour être déplacée par le couvercle pour commander l'interrupteur interne, lors du mouvement de commande du récipient de travail,
du fait que l'appareil comprend un verrou accouplé à la tige de commande, et agencé pour occuper :
- une position de verrouillage dans laquelle le récipient de travail est verrouillé en position d'arrêt, si la tige de commande n'est pas engagée avec le couvercle, ou
- une position déverrouillée dans laquelle le récipient de travail peut passer de la position d'arrêt à la position de fonctionnement, si la tige de commande est engagée avec le couvercle,
et du fait que l'appareil de préparation culinaire comprend au moins un élément élastique agencé pour être mis en contrainte lors du mouvement de commande et repousser le récipient de travail de la position de fonctionnement vers la position d'arrêt.

Le récipient de travail de l'appareil selon cette mise en oeuvre est mobile en translation et ce mouvement provoque la commande de l'interrupteur interne pour la mise en marche du moteur électrique, ce qui simplifie la liaison avec un éventuel couvercle : le couvercle n'a plus besoin de coulisser sur le récipient de travail pour commander le moteur électrique. La chaine de commande du récipient de travail sur l'interrupteur interne passe par le couvercle monté sur le récipient de travail, ce qui garantit que le récipient de travail sera obligatoirement fermé par le couvercle lors du fonctionnement de l'appareil. La sécurité d'utilisation et l'ergonomie sont améliorées par cette mise en oeuvre : le retour du récipient de travail en position d'arrêt est automatique : le moteur ne peut rester en fonctionnement continu que si l'utilisateur pousse continuellement le récipient de travail dans la position de fonctionnement.

L'ergonomie est améliorée, car si le couvercle est absent ou mal monté, l'utilisateur ne peut pas pousser le récipient de travail vers la position de fonctionnement, car le récipient de travail est verrouillé en position d'arrêt par le verrou, ce qui lui indique que le montage de l'appareil est incorrect ou incomplet pour fonctionner. En effet, le verrou ne passe dans la position déverrouillée que si le couvercle est engagé avec la tige de commande.

Selon un aspect de l'invention, la tige de commande est agencée le long du récipient de travail.

Selon un aspect de l'invention, le mouvement de commande depuis la position d'arrêt vers la position de fonctionnement comprend :
- une première partie de course pendant laquelle ledit au moins un outil de travail et l'axe d'entraînement s'engagent l'un avec l'autre,
- une deuxième partie de course pendant laquelle l'interrupteur interne est commandé.

La sécurité de fonctionnement est améliorée avec cette mise en oeuvre, car le mouvement de commande du récipient de travail est également défini pour engager l'outil de travail avec l'axe d'entraînement du moteur. En d'autres termes, l'outil de travail n'est en prise avec le moteur électrique que lorsque ce dernier doit l'entraîner : lors du mouvement du récipient de travail vers la position d'arrêt, l'outil de travail se désengage de l'axe d'entraînement, en même temps que le moteur électrique s'arrête, mais ne subit pas l'inertie du moteur électrique. L'outil de travail s'arrête plus rapidement que le moteur électrique. Il est à noter que l'invention n'est pas limitée à un engagement direct de l'outil de travail avec l'axe d'entraînement, il peut être prévu d'avoir un organe d'accouplement intermédiaire entre l'outil de travail et l'axe d'entraînement du rotor du moteur électrique.

Selon un aspect de l'invention, l'appareil comprend trois poussoirs à ressorts répartis sous le récipient de travail lorsque le récipient de travail est monté sur le boîtier support, agencés pour être mis en contrainte lors du mouvement de commande et repousser le récipient de travail de la position de fonctionnement vers la position d'arrêt. Les trois poussoirs à ressort selon cette mise en oeuvre offrent un positionnement stable au récipient de travail.

Selon un aspect de l'invention, l'engagement de la tige de commande avec le couvercle provoque un mouvement vertical de la tige de commande depuis une position libre vers une position engagée,
la tige de commande en position libre impose au verrou la position de verrouillage, pour former un obstacle au déplacement du récipient de travail vers la position de fonctionnement,
et la tige de commande en position engagée permet un mouvement horizontal de recul du verrou vers la position déverrouillée, afin de ne plus être un obstacle au déplacement du récipient de travail vers la position de fonctionnement.

En d'autres termes, la tige de commande en position libre forme une butée au verrou pour maintenir le verrou en position de verrouillage, et cette butée s'efface lorsque la tige de commande passe en position engagée : la tige de commande forme une came de commande pour le verrou.

Selon un aspect de l'invention, la tige de commande présente une ouverture pour permettre le recul du verrou, lorsque la tige de commande est en position engagée.

Selon un aspect de l'invention, le verrou est agencé pour :
- bloquer la tige de commande en position engagée lorsque le verrou est en position déverrouillée et lorsque le récipient de travail est en position de fonctionnement,
- laisser libre la tige de commande lorsque le verrou est en position de verrouillage, le récipient de travail étant en position d'arrêt.

Cette mise en oeuvre garantit que le couvercle ne peut pas être retiré lors du fonctionnement du moteur électrique, car le verrou n'autorise un mouvement de la tige de commande que si le verrou est en position de verrouillage, c'est-à-dire uniquement lorsque le récipient de travail est en position d'arrêt.

Selon un aspect de l'invention, le verrou en position déverrouillée est agencé pour entrer en butée avec le récipient de travail en position de fonctionnement. En liaison avec la mise en oeuvre dans laquelle la tige de commande forme une came de commande pour le verrou, cette mise en oeuvre prévoit que le récipient de travail forme également une came de commande. La tige de commande forme une came qui pousse le verrou en position de verrouillage lorsque le récipient de travail est en position d'arrêt, et le récipient de travail forme la contre-came qui pousse le verrou en position déverrouillée, lorsque le récipient de travail est en position de fonctionnement.

Selon un aspect de l'invention, le couvercle est agencé pour être monté sur le récipient de travail selon une interface à baïonnette.

Selon un aspect de l'invention, l'engagement du couvercle avec la tige de commande est l'engagement d'un index dans une rainure.

Selon un aspect de l'invention, l'appareil comprend un dispositif accélérateur de vitesse agencé entre le moteur électrique et ledit au moins un outil de travail.

Alors selon une forme de réalisation, le dispositif accélérateur de vitesse est monté amovible sur le boîtier support et porte le récipient de travail. En alternative, le dispositif accélérateur de vitesse pourrait notamment être monté sous le récipient de travail ou être intégré au récipient de travail.

Selon un aspect de l'invention, l'outil de travail est un outil coupant et l'appareil forme un mini hachoir.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :

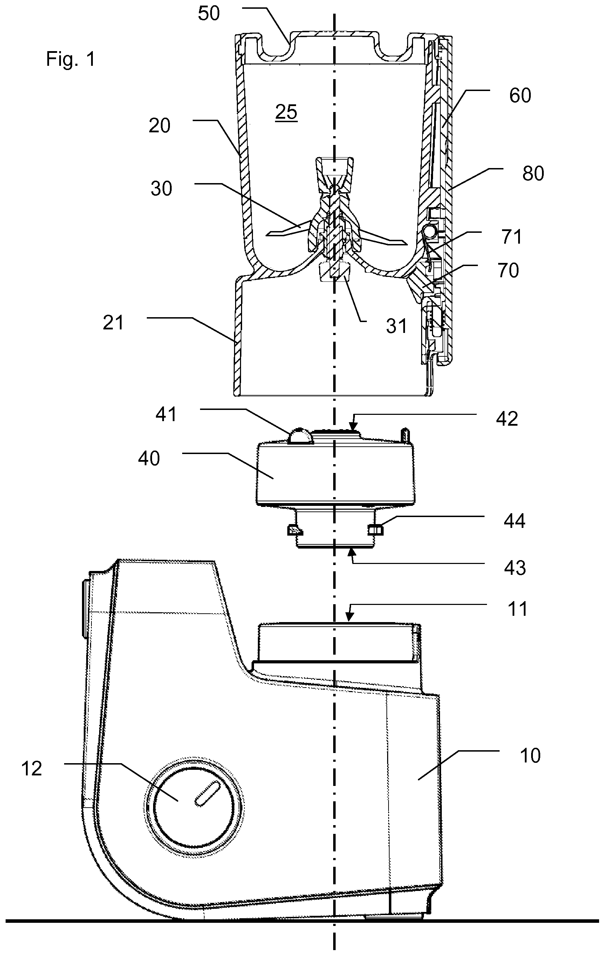

- la figure 1 représente une vue éclatée d'un appareil selon l'invention.

La figure 1 représente un appareil de préparation culinaire formant un mini hachoir. Cet appareil se différencie d'un hachoir à vis en ce qu'il comprend un outil coupant agencé pour tourner en rotation à grande vitesse dans un récipient fermé pour fragmenter des aliments à préparer.

L'appareil comprend un boîtier support 10, et peut servir comme mini hachoir. Dans ce cas, un dispositif accélérateur de vitesse 40 est monté sur le boîtier support 10, et un récipient de travail 20, comprenant un outil de travail 30 est ensuite installé sur le dispositif accélérateur de vitesse 40. L'outil de travail 30 peut être amovible par rapport au récipient de travail 20, ou y être installé à demeure. Un accouplement d'outil 31 relié à l'outil de travail 30 est agencé sous le fond du récipient de travail 20, dans un espace protégé par une jupe 21 de ce récipient de travail 20.

Le dispositif accélérateur de vitesse 40 est monté sur le boîtier support 10 par un montage de type baïonnette, et comporte des ergots 44 à cet effet. Le boîtier support 10 comprend un moteur électrique avec un axe d'entrainement 11 dont l'emplacement est indiqué par la flèche représentée. Lorsque le dispositif accélérateur de vitesse 40 est monté sur le boîtier support 10, un accouplement d'entrée 43 du dispositif accélérateur de vitesse 40 s'engage avec l'axe d'entraînement 11 du boîtier support 10. Le dispositif accélérateur de vitesse 40 est donc entraîné par l'axe d'entrainement 11 de l'appareil et multiplie la vitesse d'entrée de l'accouplement d'entrée 43, de sorte que le dispositif accélérateur de vitesse 40 présente un accouplement de sortie 42 dont la vitesse de rotation est suffisante pour offrir la fonction de mini hachoir.

Le récipient de travail 20 contient donc un outil de travail 30, et pour définir un espace de travail 25 clos lors du fonctionnement de l'appareil, un couvercle 50 est monté sur l'ouverture supérieure du récipient de travail 20. Afin de simplifier la liaison entre le couvercle 50 et le récipient de travail 20, le couvercle 50 est immobile par rapport au récipient de travail 20 lors de l'utilisation de l'appareil.

Cependant, pour garantir une bonne ergonomie d'utilisation, la commande du moteur se fait en appuyant sur le couvercle 50, pour obtenir un fonctionnement intermittent de l'appareil. Lors de l'utilisation, le récipient de travail 20 est mobile en translation verticale par rapport au boîtier support 10, de sorte que le récipient de travail 20 effectue un mouvement de commande depuis une position d'arrêt vers une position de fonctionnement, dans laquelle un interrupteur interne électrique est fermé, de sorte à provoquer le fonctionnement de l'appareil.

A cet effet, lorsque le dispositif accélérateur de vitesse 40 est monté sur le boîtier support 10, l'utilisateur dispose l'outil de travail 30 dans le récipient de travail 20, ainsi que les aliments à préparer, et ferme le récipient de travail 20 avec le couvercle 50. Le sous ensemble obtenu est ensuite posé sur le dispositif accélérateur de vitesse 40. Ce dernier comprend des poussoirs à ressorts 41 qui soutiennent le sous ensemble récipient de travail 20 - couvercle 50 dans une position d'arrêt. Dans cette position d'arrêt, l'accouplement d'outil 31 n'est pas engagé avec l'accouplement de sortie 42 du dispositif accélérateur de vitesse 40, et le moteur électrique de l'appareil ne fonctionne pas.

Pour mettre en route le moteur électrique de l'appareil, l'utilisateur positionne un interrupteur général 12 sur une position mini hachoir, et pousse vers le bas le sous ensemble récipient de travail 20 - couvercle 50. Ce mouvement de translation verticale vers le bas provoque en premier lieu un engagement entre l'accouplement d'outil 31 de l'outil de travail 30 et l'accouplement de sortie 42 du dispositif accélérateur de vitesse 40, puis en second lieu une commande d'un interrupteur interne de l'appareil afin de mettre en fonctionnement le moteur électrique. Lorsque l'utilisateur relâche son effort, les poussoirs à ressorts 41 repoussent automatiquement le récipient de travail 20 vers le haut dans sa position d'arrêt, de sorte que l'interrupteur interne est ouvert et coupe le fonctionnement du moteur. De plus, l'accouplement d'outil 31 se désengage de l'accouplement de sortie 42, ce qui permet un arrêt rapide de l'outil de travail 30, même si le moteur électrique continue de tourner, en raison de son inertie et de celle du dispositif accélérateur de vitesse 40.

Afin de garantir la sécurité de l'utilisateur pendant le fonctionnement, il convient d'empêcher tout accès à l'outil de travail 30 lorsqu'il tourne.

A cet effet, un système de sécurité est intégré au récipient de travail 20. Tout d'abord, une tige de commande 60 est agencée le long du récipient de travail 20. Cette tige de commande 60 est agencée pour s'engager avec le couvercle 50 lorsque le couvercle 50 est monté sur le récipient de travail 20. Cet engagement provoque un mouvement vertical vers le bas de la tige de commande 60 (qui passe d'une position libre vers une position engagée), de sorte que lorsque le sous ensemble récipient de travail 20 - couvercle 50 est poussé dans la position de fonctionnement, c'est une extrémité inférieure de la tige de commande 60 qui agit sur l'interrupteur interne de l'appareil. Si la tige de commande 60 n'est pas engagée avec le couvercle 50, elle reste dans la position libre et son extrémité inférieure ne peut agir sur l'interrupteur interne car elle reste trop haute. En d'autres termes, l'interrupteur interne n'est actionné que si la tige de commande 60 est en position engagée, donc seulement si le couvercle 50 est monté et en place sur le récipient de travail 20.

De plus, un verrou 70 est accouplé à la tige de commande 60, afin d'améliorer la sécurité et l'ergonomie d'utilisation. En effet, ce verrou 70 peut occuper deux positions : une position de verrouillage dans laquelle le verrou 70 verrouille le récipient de travail 20 dans la position d'arrêt, et une position déverrouillée, dans laquelle le récipient de travail 20 peut aller dans la position de fonctionnement. La position du verrou 70 est commandée essentiellement par la tige de commande 60. Lorsque la tige de commande 60 est en position libre (c'est-à-dire lorsque le couvercle 50 n'est pas correctement monté et en place sur le récipient de travail 20), le verrou 70 est poussé par la tige de commande 60 vers l'axe de rotation, de sorte que le verrou 70 forme un obstacle au mouvement du récipient de travail 20, et le récipient de travail 20 ne peut pas descendre vers la position de fonctionnement. Il en résulte que si le couvercle 50 est absent ou mal monté, le récipient de travail 20 ne peut pas effectuer le mouvement de commande, ce qui indique immédiatement à l'utilisateur qu'un élément est mal monté. Par contre, si le couvercle 50 est correctement monté, la tige de commande 60 descend en position engagée, et libère, grâce à une ouverture, le verrou 70 et le verrou 70 peut reculer vers la position déverrouillée, pour ne plus former d'obstacle au récipient de travail 20. Le récipient de travail 20 peut descendre en position de fonctionnement, de sorte que la tige de commande 60 actionne l'interrupteur interne de l'appareil.

Enfin, lors du fonctionnement du moteur électrique, l'appareil empêche tout retrait du couvercle 50. En effet, le verrou 70, reculé en position déverrouillée, bloque la tige de commande 60 dans la position engagée, car le verrou 70 est en butée contre le récipient de travail 20. Autrement dit, lorsque le récipient de travail 20 est en position de fonctionnement, le récipient de travail 20 bloque le verrou 70 en position déverrouillée, qui bloque à son tour la tige de commande 60 en position engagée. La tige de commande 60 ne peut pas remonter en position libre, et le couvercle 50 ne peut pas se désengager de la tige de commande 60, le couvercle 50 reste bloqué dans sa position de montage sur le récipient de travail 20, tant que le récipient de travail 20 est en position de fonctionnement. Lors du retour du récipient de travail 20 dans la position d'arrêt, un ressort 71 aide le verrou 70 à retourner dans la position de verrouillage, afin de permettre aisément à la tige de commande 60 de retourner en position libre, si l'utilisateur veut démonter le couvercle 50.

Enfin, une plaque 80 recouvre la tige de commande 60 et le verrou 70, pour améliorer l'esthétique du récipient de travail 20 et cacher toutes ces pièces mobiles.

A titre de variante, le dispositif accélérateur de vitesse 40 n'est pas nécessairement indépendant du boîtier support 10.

A titre de variante, l'appareil ne comporte pas nécessairement un dispositif accélérateur de vitesse 40.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de préparation culinaire comprenant :
- un boîtier support (10),
- un moteur électrique logé dans le boîtier support (10), avec un axe d'entraînement (11),
- un récipient de travail (20) agencé pour être monté sur le boîtier support (10),
- au moins un outil de travail (30) agencé dans le récipient de travail (20) pour y être entrainé par l'axe d'entrainement (11),
- un interrupteur interne agencé pour commander le moteur électrique,
- un couvercle (50) agencé pour être monté de manière amovible sur le récipient de travail (20),
le récipient de travail (20) monté sur le boîtier support (10) étant mobile par rapport au boîtier support (10) depuis une position d'arrêt vers une position de fonctionnement, pour commander l'interrupteur interne lors d'un mouvement de commande provoqué par un utilisateur ;
l'appareil comprenant une tige de commande (60) agencée pour s'engager avec le couvercle (50) lors du mouvement de montage du couvercle (50) sur le récipient de travail (20), la tige de commande (60) engagée avec le couvercle (50) monté sur le récipient de travail (20) étant agencée pour être déplacée par le couvercle (50) pour commander l'interrupteur interne, lors du mouvement de commande du récipient de travail (20),
**caractérisé en ce qu'**il comprend un verrou (70) accouplé à la tige de commande (60), et agencé pour occuper :
- une position de verrouillage dans laquelle le récipient de travail (20) est verrouillé en position d'arrêt, si la tige de commande (60) n'est pas engagée avec le couvercle (50), ou
- une position déverrouillée dans laquelle le récipient de travail (20) peut passer de la position d'arrêt à la position de fonctionnement, si la tige de commande (60) est engagée avec le couvercle (50)
et **en ce qu'**il comprend au moins un élément élastique agencé pour être mis en contrainte lors du mouvement de commande et repousser le récipient de travail (20) de la position de fonctionnement vers la position d'arrêt.

2. Appareil selon la revendication 1, **caractérisé en ce que** la tige de commande (60) est agencée le long du récipient de travail (20).

3. Appareil selon l'une des revendications 1 ou 2, **caractérisé en ce que** le mouvement de commande depuis la position d'arrêt vers la position de fonctionnement comprend :
- une première partie de course pendant laquelle ledit au moins un outil de travail (30) et l'axe d'entraînement (11) s'engagent l'un avec l'autre,
- une deuxième partie de course pendant laquelle l'interrupteur interne est commandé.

4. Appareil selon l'une des revendications 1 à 3, **caractérisé en ce que** le récipient de travail (20) est mobile en translation verticale par rapport au boîtier support (10).

5. Appareil selon l'une des revendications 1 à 4, **caractérisé en ce qu'**il comprend trois poussoirs à ressorts (41) répartis sous le récipient de travail (20) lorsque le récipient de travail (20) est monté sur le boîtier support (10), agencés pour être mis en contrainte lors du mouvement de commande et repousser le récipient de travail (20) de la position de fonctionnement vers la position d'arrêt.

6. Appareil selon l'une des revendications 1 à 5, **caractérisé en ce que** l'engagement de la tige de commande (60) avec le couvercle (50) provoque un mouvement vertical de la tige de commande (60) depuis une position libre vers une position engagée,
**en ce que** la tige de commande (60) en position libre impose au verrou (70) la position de verrouillage, pour former un obstacle au déplacement du récipient de travail (20) vers la position de fonctionnement,
et **en ce que** la tige de commande (60) en position engagée permet un mouvement horizontal de recul du verrou (70) vers la position déverrouillée, afin de ne plus être un obstacle au déplacement du récipient de travail (20) vers la position de fonctionnement.

7. Appareil selon la revendication 6, **caractérisé en ce que** la tige de commande (60) présente une ouverture pour permettre le recul du verrou (70), lorsque la tige de commande (60) est en position engagée.

8. Appareil selon l'une des revendications 1 à 7, **caractérisé en ce que** le verrou (70) est agencé pour :
- bloquer la tige de commande (60) en position engagée lorsque le verrou (70) est en position déverrouillée et lorsque le récipient de travail (20) est en position de fonctionnement,
- laisser libre la tige de commande (60) lorsque le verrou (70) est en position de verrouillage, le récipient de travail (20) étant en position d'arrêt.

9. Appareil selon la revendication 8, **caractérisé en ce que** le verrou (70) en position déverrouillée est agencé pour entrer en butée avec le récipient de travail (20) en position de fonctionnement.

10. Appareil selon l'une des revendications 1 à 9, **caractérisé en ce que** le couvercle (50) est agencé pour être monté sur le récipient de travail (20) selon une interface à baïonnette.

11. Appareil selon l'une des revendications 1 à 10, **caractérisé en ce que** l'engagement du couvercle (50) avec la tige de commande (60) est l'engagement d'un index dans une rainure.

12. Appareil selon l'une des revendications 1 à 11, **caractérisé en ce qu'**il comprend un dispositif accélérateur de vitesse (40) agencé entre le moteur électrique et ledit au moins un outil de travail (30).

13. Appareil selon la revendication 12, **caractérisé en ce que** le dispositif accélérateur de vitesse (40) est monté amovible sur le boîtier support (10) et porte le récipient de travail (20).

14. Appareil selon l'une des revendications 1 à 13, **caractérisé en ce que** l'outil de travail (30) est un outil coupant et **en ce que** l'appareil forme un mini hachoir.

## Patentansprüche

1. Gerät zur Nahrungsmittelzubereitung, umfassend:
- ein Traggehäuse (10),
- einen elektrischen Motor, der in dem Traggehäuse (10) untergebracht ist, mit einer Antriebswelle (11),
- einen Arbeitsbehälter (20), der angeordnet ist, um an dem Traggehäuse (10) angebracht zu werden,
- mindestens ein Arbeitswerkzeug (30), das in dem Arbeitsbehälter (20) angeordnet ist, um dort von der Antriebswelle (11) angetrieben zu werden,
- einen internen Schalter, der angeordnet ist, um den elektrischen Motor zu steuern;
- eine Abdeckung (50), die angeordnet ist, um an dem Arbeitsbehälter (20) abnehmbar angebracht zu sein,
wobei der Arbeitsbehälter (20), der an dem Traggehäuse (10) angebracht ist, relativ zu dem Traggehäuse (10) von einer Stoppposition zu einer Betriebsposition bewegbar ist, um den internen Schalter bei einer Steuerbewegung, die vom Benutzer hervorgerufen wird, zu steuern;
wobei die Vorrichtung eine Steuerstange (60) umfasst, die angeordnet ist, um in die Abdeckung (50) während der Montagebewegung der Abdeckung (50) auf dem Arbeitsbehälter (20) einzugreifen, wobei die Steuerstange (60), die in die Abdeckung (50) eingreift, die an dem Arbeitsbehälter (20) angebracht ist, angeordnet ist, um durch die Abdeckung (50) verschoben zu werden, um den internen Schalter während der Steuerbewegung des Arbeitsbehälters (20) zu steuern,
**dadurch gekennzeichnet, dass** es einen Riegel (70) umfasst, der mit der Steuerstange (60) gekoppelt ist und angeordnet ist, um einzunehmen:
- eine verriegelte Position, in der der Arbeitsbehälter (20) in der Stopposition verriegelt ist, wenn die Steuerstange (60) nicht in die Abdeckung (50) eingreift, oder
- eine entriegelte Position, in der sich der Arbeitsbehälter (20) von der Stoppposition zu der Betriebsposition bewegen kann, wenn die Steuerstange (60) in die Abdeckung (50) eingreift,
und dass es mindestens ein elastisches Element umfasst, das angeordnet ist, während der Steuerbewegung beansprucht zu werden und den Arbeitsbehälter (20) von der Betriebsposition zu der Stoppposition zu schieben.

2. Gerät nach Anspruch 1, **dadurch gekennzeichnet, dass** die Steuerstange (60) längs des Arbeitsbehälters (20) angeordnet ist.

3. Gerät nach einem der Ansprüche 1 oder 2, **dadurch gekennzeichnet, dass** die Steuerbewegung von der Stoppposition zu der Betriebsposition umfasst:
- einen ersten Laufabschnitt, während dem das mindestens eine Arbeitswerkzeug (30) und die Antriebswelle (11) ineinander eingreifen.
- einen zweiten Laufabschnitt, während dem der interne Schalter gesteuert wird.

4. Gerät nach einem der Ansprüche 1 bis 3, **dadurch gekennzeichnet, dass** der Arbeitsbehälter (20) mit Bezug auf das Traggehäuse (10) vertikal beweglich ist.

5. Gerät nach einem der Ansprüche 1 bis 4, **dadurch gekennzeichnet, dass** es drei federbelastete Schieber (41) umfasst, die unter dem Arbeitsbehälter (20) verteilt sind, wenn der Arbeitsbehälter (20) auf dem Traggehäuse (10) angebracht ist, wobei sie angeordnet sind, während der Steuerbewegung beansprucht zu werden und den Arbeitsbehälter (20) von der Betriebsposition zu der Stoppposition zu drücken.

6. Gerät nach einem der Ansprüche 1 bis 5, **dadurch gekennzeichnet, dass** der Eingriff der Steuerstange (60) in die Abdeckung (50) eine vertikale Bewegung der Steuerstange (60) von einer freien Position zu einer Eingriffsposition bewirkt,
dass die Steuerstange (60) in der freien Position dem Riegel (70) die verriegelte Position aufzwingt, um ein Hindernis für die Verschiebung des Arbeitsbehälters (20) zu der Betriebsposition zu bilden,
und dass die Steuerstange (60) in der Eingriffsposition eine horizontale Rückstellbewegung des Riegels (70) zu der entriegelten Position ermöglicht, um so die Bewegung des Arbeitsbehälters (20) zu der Betriebsposition nicht zu behindern.

7. Gerät nach Anspruch 6, **dadurch gekennzeichnet, dass** die Steuerstange (60) eine Öffnung aufweist, um das Zurückziehen des Riegels (70) zu ermöglichen, wenn sich die Steuerstange (60) in der Eingriffsposition befindet.

8. Gerät nach einem der Ansprüche 1 bis 7, **dadurch gekennzeichnet, dass** der Riegel (70) angeordnet ist zum:
- Blockieren der Steuerstange (60) in der Eingriffsposition, wenn der Riegel (70) in der entriegelten Position ist ,und wenn der Arbeitsbehälter (20) in der Betriebsposition ist,
- Freilassen der Steuerstange (60), wenn sich der Riegel (70) in der verriegelten Position befindet, wobei sich der Arbeitsbehälter (20) in der Stoppposition befindet.

9. Gerät nach Anspruch 8, **dadurch gekennzeichnet, dass** der Riegel (70) in der entriegelten Position angeordnet ist, um in der Betriebsposition an dem Arbeitsbehälter (20) anzuliegen.

10. Gerät nach einem der Ansprüche 1 bis 9, **dadurch gekennzeichnet, dass** die Abdeckung (50) angeordnet ist, um auf dem Arbeitsbehälter (20) in einer Bajonett-Schnittstelle angebracht zu werden.

11. Gerät nach einem der Ansprüche 1 bis 10, **dadurch gekennzeichnet, dass** der Eingriff der Abdeckung (50) in die Steuerstange (60) der Eingriff einer Feder in eine Nut ist.

12. Gerät nach einem der Ansprüche 1 bis 11, **dadurch gekennzeichnet, dass** es eine Geschwindigkeitsbeschleunigervorrichtung (40) umfasst, die zwischen dem elektrischen Motor und dem mindestens einen Arbeitswerkzeug (30) angeordnet ist.

13. Gerät nach Anspruch 12, **dadurch gekennzeichnet, dass** die Geschwindigkeitsbeschleunigervorrichtung (40) abnehmbar an dem Traggehäuse (10) angebracht ist und den Arbeitsbehälter (20) trägt.

14. Gerät nach einem der Ansprüche 1 bis 13, **dadurch gekennzeichnet, dass** das Arbeitswerkzeug (30) ein Schneidwerkzeug ist, und dass das Gerät einen Minifleischwolf bildet.

## Claims

1. Device for preparing food comprising:
- a support casing (10),
- an electric motor housed in the support casing (10), with a driving axis (11),
- a work container (20) arranged to be mounted on the support casing (10),
- at least one work tool (30) arranged in the work container (20) to be driven there by the driving axis (11),
- an inner switch arranged to control the electric motor,
- a cover (50) arranged to be mounted so that it can be removed on the work container (20),
the work container (20) mounted on the support casing (10) being mobile with respect to the support casing (10) from a stop position to a functioning position, to control the inner switch during the control movement caused by a user;
the device comprising a control rod (60) arranged to be engaged with the cover (50) during the mounting movement of the cover (50) on the work container (20), the control rod (60) engaged with the cover (50) mounted on the work container (20) being arranged to be moved by the cover (50) to control the inner switch, during the control movement of the work container (20),
**characterised in that** it comprises a latch (70) coupled with the control rod (60), and arranged to occupy:
- a locking position wherein the work container (20) is locked in stop position, if the control rod (60) is not engaged with the cover (50), or
- an unlocked position wherein the work container (20) can pass from the stop position to the functioning position, if the control rod (60) is engaged with the cover (50) and **in that** it comprises at least one elastic element arranged to be stressed during the control movement and push the work container (20) from the functioning position to the stop position.

2. Device according to claim 1, **characterised in that** the control rod (60) is arranged along the work container (20).

3. Device according to one of claims 1 or 2, **characterised in that** the control movement from the stop position to the functioning position comprises:
- a first part of running during which said at least one work tool (30) and the driving axis (11) are engaged with each other,
- a second part of running during which the inner switch is controlled.

4. Device according to one of claims 1 to 3, **characterised in that** the work container (20) can be moved vertically forward with respect to the support casing (10).

5. Device according to one of claims 1 to 4, **characterised in that** it comprises three spring-loaded push-buttons (41) distributed under the work container (20) when the work container (20) is mounted on the support casing (10), arranged to be stressed during the control movement and push the work container (20) from the functioning position to the stop position.

6. Device according to one of claims 1 to 5, **characterised in that** the engagement of the control rod (60) with the cover (50) causes a vertical movement of the control rod (60) from a free position to an engaged position,
**in that** the control rod (60) in the free position imposes the locking position on the latch (70), to form an obstacle to move the work container (20) to the functioning position,
and **in that** the control rod (60) in the engaged position enables a horizontal movement to recess the latch (70) to the unlocked position, in order to no longer be an obstacle in moving the work container (20) to the functioning position.

7. Device according to claim 6, **characterised in that** the control rod (60) has an opening to enable the recessing of the latch (70), when the control rod (60) is in the engaged position.

8. Device according to one of claims 1 to 7, **characterised in that** the latch (70) is arranged to:
- block the control rod (60) in the engaged position when the latch (70) is in the unlocked position and when the work container (20) is in the functioning position,
- leave the control rod (60) free when the latch (70) is in the locking position, the work container (20) being in the stop position.

9. Device according to claim 8, **characterised in that** the latch (70) in the unlocked position is arranged to abut the work container (20) in the functioning position.

10. Device according to one of claims 1 to 9, **characterised in that** the cover (50) is arranged to be mounted on the work container (20) along a bayonet interface.

11. Device according to one of claims 1 to 10, **characterised in that** the engagement of the cover (50) with the control rod (60) is the engagement of an index finger in a groove.

12. Device according to one of claims 1 to 11, **characterised in that** it comprises a speed accelerating device (40) arranged between the electric motor and said at least one work tool (30).

13. Device according to claim 12, **characterised in that** the speed accelerating device (40) is mounted so that it can be moved on the support casing (10) and supports the work container (20).

14. Device according to one of claims 1 to 13, **characterised in that** the work tool (30) is a cutting tool and **in that** the device forms a mini-cutter.
